# EUROPEAN PATENT SPECIFICATION

(11) **EP 2 085 972 B1**
(45) Date of publication and mention of the grant of the patent: **20.03.2013**
(21) Application number: 09000573.7
(22) Date of filing: 16.01.2009
(51) Int. Cl.: G11B 27/10, G11B 27/34, G11B 27/034, G11B 27/28, H04N 5/76, H04N 5/781

(54) **Apparatus for recording digital broadcast and method of searching for final playback location**
Vorrichtung zur Aufzeichnung von digitalem Rundfunk und Verfahren zum Suchen der Wiedergabeendstelle
Appareil d'enregistrement de diffusion numérique et procédé de recherche de localisation de lecture finale

(30) Priority: 01.02.2008 KR 20080010556
(43) Date of publication of application: 05.08.2009
(73) Proprietor: Topfield Co., Ltd., Bundang-gu Seongnam-si Gyeonggi-do 463-869 (KR)
(72) Inventor: Lee, Hyun-Chang, Seoul (KR)
(74) Representative: Jordan, Volker Otto Wilhelm

(56) References cited:
- EP-A- 1 650 970
- EP-A- 1 801 803
- US-A- 5 701 383
- US-A1- 2002 180 622
- US-B1- 6 393 201

## Description

### BACKGROUND

### 1. FIELD

The following description relates to an apparatus for receiving and recording a digital broadcasting stream, and more particularly, to a method of playing back and controlling a recorded digital broadcasting stream.

### 2. Description of the Related Art

Digital broadcasting is to carry broadcasts by compressing television signals in a digital form not in an analog manner. In the digital broadcasting scheme, image and audio signals are encoded into digital data, and system information and program information are encoded in accordance with program and system information protocol (PSIP) or digital video broadcasting specification for service information (DVB-SI), and they are transmitted in a form of transport stream (TS). Then, a digital broadcast receiver decodes video and audio signals from the TS and displays the video and audio signals on a screen. Also, the digital broadcast receiver extracts information about the broadcasting programs from the data other than video/audio information data, informs viewers of the extracted information through an electronic program guide (EPG), and establishes database of the information.

A hard disk drive (HDD), an auxiliary memory device of a computer system, with which random access is available, has a high-speed transmission and can be implemented as a large- capacity device with less cost compared to other auxiliary memory devices, and accordingly it has been increasingly used as a random access storage device for a digital broadcast receiver. The digital broadcast receiver employing the random access storage device allows recording and playing back of broadcasts and also provides a viewer with a time shifting service.

Document EP 1 650 970 A1 discloses a broadcasting recording apparatus according to the preamble of claim 1. The apparatus includes a broadcast stream record/reproduction controller for controlling recording/reproducing operations of a scrambled broadcast stream, a descrambler for descrambling a reproduced broadcast stream, a reproduction stream record/reproduction controller for controlling/reproducing operations of the broadcast stream descrambled by the descrambler, and a broadcast stream reproduction restarting request unit for requesting a reproduction restarting operation of the reproduction-halted broadcast stream from the reproduction stop point, when the descrambler can be used to descramble the reproduction-halted record broadcast stream.

As examples of such digital broadcast receivers, Tivo and personal video recorder (PVR) introduced by the Replay TV are noticeable. Such the broadcasting signal receiving systems include a time-shifting recording function and a function of recording broadcasting signals from a channel beside of the currently viewed channel. Therefore, a viewer can record a broadcasting program that the viewer cannot watch in real time, and watch the program at any time the viewer wants. In addition, the viewer may rewind or forward scenes of the broadcasting program to find the final playback location. However, the conventional searching method through rewinding and forwarding is inconvenient to find the final playback location of a broadcasting stream, and is even hard to find the accurate final playback location.

It is therefore an object of the present invention to overcome above-described disadvantages.

### SUMMARY

Above-described object is achieved by the device according to claim 1 and by the method according to claim 3.

There is provided a method allowing a quick and easy search for a final playback location of a recorded broadcasting stream when a viewer watches a recorded broadcasting program which the viewer previously stopped viewing halfway.

Other features will become apparent to those skilled in the art from the following detailed description, which, taken in conjunction with the attached drawings, discloses exemplary embodiments of the invention.

### BRIEF DESCRIPTION OF THE DRAWINGS

FIG. 1 is a block diagram of a broadcasting recording apparatus according to an exemplary embodiment.
FIG. 2 is a flowchart of a method of controlling reproducing of a broadcasting stream by searching for a final playback location of the broadcasting stream in a broadcasting recording apparatus according to an exemplary embodiment.

### DETAILED DESCRIPTION

The following detailed description is provided to assist the reader in gaining a comprehensive understanding of the methods, apparatuses and/or systems described herein. Accordingly, various changes, modifications, and equivalents of the systems, apparatuses and/or methods described herein will be suggested to those of ordinary skill in the art. Also, descriptions of well-known functions and constructions are omitted to increase clarity and conciseness.

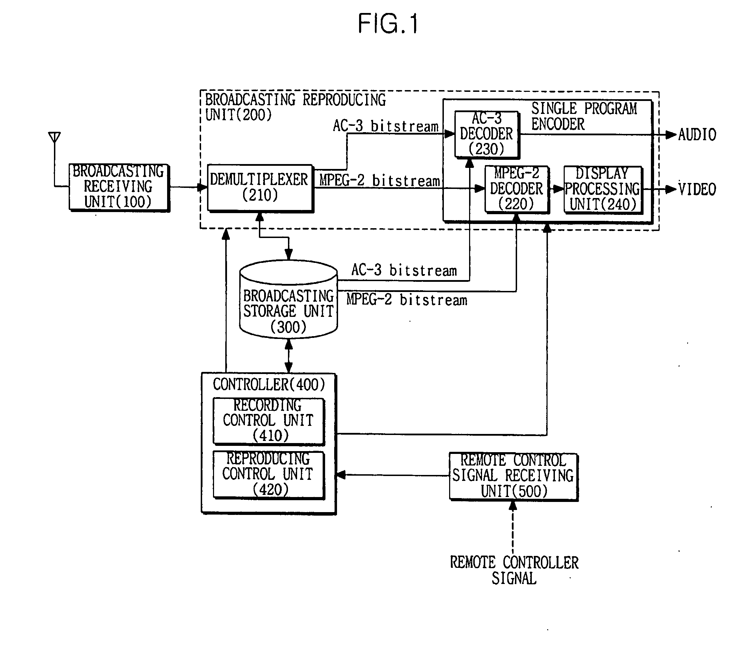

FIG. 1 is a block diagram of a broadcasting recording apparatus according to an exemplary embodiment. The broadcasting recording apparatus may be a personal video recorder (PVR). As shown in FIG. 1, the broadcasting recording apparatus includes a broadcasting receiving unit 100, a broadcasting reproducing unit 200, a broadcasting storage unit 300, and a control unit 400 including a recording control unit 410 and a reproducing control unit 420. The broadcasting receiving unit 100 receives a digital broadcasting stream, the broadcasting storage unit 300 stores the received digital broadcasting stream, the broadcasting reproducing unit 200 reproduces and outputs the stored broadcasting stream, the recording control unit 410 records the received digital broadcasting stream in the broadcasting storage unit 300, and the reproducing control unit 420 controls the broadcasting reproducing unit 200 to reproduce the digital broadcasting stream stored in the broadcasting storing unit 300 from a reproduction stop point in response to an operation instruction. Moreover, the broadcasting recording apparatus further includes a remote control signal receiving unit 500 that receives an operation instruction from a remote controller.

The broadcasting receiving unit 100 includes a tuner and a demodulator. The broadcasting receiving unit 100 controls channel sync under the control of the control unit 400 and then obtains a transport stream from a bitstream by demodulation of the demodulator in accordance with a modulation scheme. The digital broadcasting scheme may determine the way of modulation. For example, the ATSC scheme employs 8-VSB modulation scheme, and DVB scheme employs 8PSK, QPSK, BPSK, QAM, and COFDM modulation schemes. Therefore, the broadcasting receiving unit 100 is allowed to obtain a transport stream from a broadcasting signal tuned by a demodulator of either 8-VSB or one of 8PSK, QPSK, BPSK, QAM, and COFDM.

A demultiplexer 210 demultiplexes the transport stream to obtain a video bitstream (MPEG-2 bitstream) and an audio bitstream (AC-3 bitstream). The obtained video bitstream (MPEG-2 bitstream) and the audio bitstream (AC-3 bitstream) are input to an MPEG-2 decoder 220 and an AC-3 decoder 230, respectively. The present embodiment has been described under the precondition that TS for digital broadcasting is generated by using the MPEG-2(ISO/IEC 13818-1) video and the AC3 (Dolby Digital ™) audio. The digital video signal decoded by the MPEG-2 decoder 220 is converted by a display processing unit 240 in a manner that is compliable with a display scheme, and is output as a video signal. For this purpose, the display processing unit 240 may include a NTSC/PAL encoder. The AC-3 decoder 230 decodes the audio bitstream (AC-3 bitstream) and outputs an audio signal. The output video and audio signals are provided to a TV receiver.

The video bitstream (MPEG-2 bitstream) and the audio bitstream (AC-3 bitstream) output from the demultiplexer 210 are stored as files in the broadcasting storage unit 300 under the control of the control unit 400. The control unit 400 controls the stored video bitstream (MPEG-2 bitstream) and audio bitstream (AC-3 bitstream) to be read out from the broadcasting storage unit 300 and input, respectively, to the MPEG-2 decoder 220 and the AC-3 decoder 230. According to another exemplary embodiment, the broadcasting stream stored in the broadcasting storage unit 300 is input to the demultiplexer 210 to be demultiplexed under the control of the control unit 400, and then the demultiplexed broadcasting stream is decoded to be provided to a TV receiver. The latter case is for the broadcasting bitstream which has not been completely demultiplexed. Such schemes vary according to the system implementation methods. Also, the broadcasting storage unit 300, as a recording medium, may be a hard disk drive (HDD).

The control unit 400 controls the overall operation of the broadcasting recording apparatus, and includes the recording control unit 410 and the reproducing control unit 420. The recording control unit 410 records the broadcasting stream received by the broadcasting receiving unit 100 from a channel to be recorded in the broadcasting storage unit 300. Then, the reproducing control unit 420 reads out the broadcasting stream from the broadcasting storage unit 300, and controls the broadcasting stream to be output to and reproduced by the broadcasting reproducing unit 200. According to another exemplary embodiment, the reproducing control unit 420 controls the broadcasting stream to be reproduced from a location where previously the reproducing is stopped. The operation instruction may be a double-input of a reproducing key within a predetermined period of time. In the exemplary embodiment, the reproducing control unit 420 records information of the reproduction stop location where the reproducing of the broadcasting stream is stopped, and searches for a corresponding location desired to be reproduced of the broadcasting stream with reference to the reproduction stop location and resumes reproducing the broadcasting stream from the searched location. As an example, the information of the reproduction stop location is time information of when the reproducing of the broadcasting stream is stopped. Hence, the reproducing control unit 420 searches for a corresponding location of the broadcasting stream with reference to the time information, and controls the broadcasting reproducing unit 200 to reproduce the broadcasting stream from the searched location.

The remote control signal receiving unit 500 receives remote control signals which are operation instructions of a user from a remote controller, and decodes and outputs the remote control signals to the control unit 400. Thus, the remote controller allows the user to reproduce the broadcasting stream from the location where the reproducing of the broadcasting stream is previously stopped.

Hereinafter, a method of reproducing a broadcasting stream by quickly searching for a location of the broadcasting stream where previously reproduction is stopped will now be described in detail.

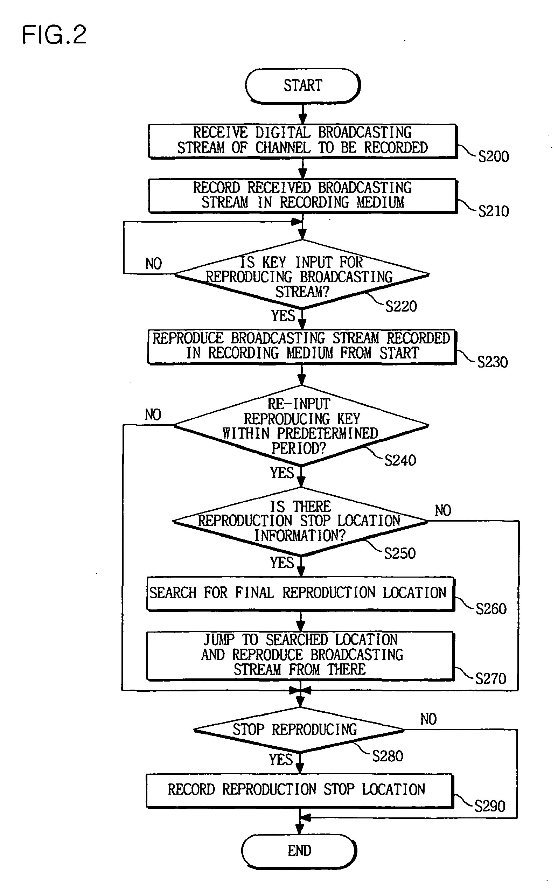

FIG. 2 is a flowchart of a method of controlling reproducing of a broadcasting stream by searching for a final playback location of the broadcasting stream in a broadcasting recording apparatus according to an exemplary embodiment.

When a viewer selects a broadcasting channel to be recorded by use of a remote controller and directs record of the broadcasting program, the recording control unit 410 controls the broadcasting storage unit 300 to record a broadcasting stream (operation S210) which has been received by the broadcasting receiving unit 100 and input to the demultiplexer 210 (operation S200). Here, the broadcasting storage unit 300 is a recording medium, which may be a hard disk drive (HDD). Once the recording is finished and when there is an input for reproducing the recorded broadcasting program or an input for time-shifting viewing (operation S220), the reproducing control unit 420 controls the corresponding broadcasting streams stored in the broadcasting recording unit 300 to be reproduced from the beginning (operation S230). The reproducing control unit 420 may show a progress bar upon reproducing the broadcasting stream, so that the viewer can be provided with information of the recorded amount of the broadcasting program, the time duration for recording, and the current playback location of the recorded broadcasting streams.

When the viewer presses the reproducing key again while the progress bar is being shown (operation S240), the control unit 400 recognizes the input through the remote control signal receiving unit 500 and checks if there is information of the final playback location of the broadcasting stream file to be reproduced (operation S250). The information of the final playback location of the broadcasting stream may be time information of when the reproduction of the broadcasting stream is stopped. If there is the time information of the final playback location, the control unit 400 searches for a corresponding location of the broadcasting stream with reference to the time information (operation S260). Then reproducing of the broadcasting stream is resumed from the searched final playback location under the control of the control unit 400 (operation 270). When the viewer stops reproducing the broadcasting stream using a remote controller before the broadcasting stream is completely played back (operation S280), the reproducing control unit 420 records time information of when the reproduction of broadcasting stream is stopped (operation S290). For example, a field is added to a corresponding broadcasting stream and then the time information is recorded in the field. By recording the reproduction stop location of the broadcasting stream, the final playback location of the broadcasting stream can be found quickly and facilitate resuming of playback of the broadcasting stream.

Consequently, for example, when a viewer stopped reproducing a recorded two-hour length broadcasting program after one hour and ten minutes from the beginning of the program and afterwards reproduces the program again, the recorded broadcasting program is reproduced from the beginning, and if the viewer presses a reproducing key once again within five seconds, the broadcasting program is reproduced from the one-hour and ten-minute point.

According to the exemplary embodiments, in reproducing a recorded digital broadcasting stream which is stopped being reproduced halfway, a reproduction stop location is recorded and the final playback location of the broadcasting stream is searched for with reference to information of the reproduction stop location. When the broadcasting stream is reproduced later again, the broadcasting stream can be played back from the searched location. In other words, the final playback location of the broadcasting stream is found quickly and the broadcasting stream is reproduced from the searched location.

Also, according to the exemplary embodiment, a simple and convenient user interface is provided, which allows a user to reproduce a broadcasting stream from the final playback location only by double-press of a reproducing key.

A number of exemplary embodiments have been described above. Nevertheless, it will be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

A digital broadcasting recording apparatus and a reproducing control method performed in the digital broadcasting recording apparatus are disclosed. The broadcasting recording apparatus includes a broadcasting receiving unit which receives a digital broadcasting stream; a broadcasting storage unit which stores the received digital broadcasting stream; a broadcasting reproducing unit which reproduces the broadcasting stream stored in the broadcasting storage unit; and a control unit which includes a recording control unit that records the received digital broadcasting stream in the broadcasting storage unit and a reproducing control unit which, according to an operation instruction, controls the broadcasting reproducing unit to reproduce the stored digital broadcasting stream from a reproducing stop location where previously the reproducing of the broadcasting stream is stopped. Accordingly, the final playback location of the broadcasting stream may be quickly searched and then the broadcasting stream can be reproduced from the searched location.

## Claims

1. A broadcasting recording apparatus comprising:
a broadcasting receiving unit configured to receive a digital broadcasting stream;
a broadcasting storage unit configured to store the received digital broadcasting stream;
a broadcasting reproducing unit configured to reproduce the digital broadcasting stream stored in the broadcasting storage unit;
and
a control unit including
a recording control unit configured to record the received digital broadcasting stream in the broadcasting storage unit; and
a reproducing control unit configured to record information of a reproduction stop location of the recorded digital broadcasting stream when stopping the reproducing of the digital broadcasting stream,
**characterized in that** the reproducing control unit is configured to control the broadcasting reproducing unit to reproduce the recorded digital broadcasting stream from the beginning when a predetermined key of a remote controller is input for reproducing the recorded digital broadcasting stream, and is configured
to determine if the key is re-input within a predetermined period of time, and, if this is true,
to search for the reproduction stop location with reference to the recorded information and
to reproduce the digital broadcasting stream from the searched reproduction stop location.

2. The broadcasting recording apparatus according to claim 1,
wherein the information of the reproduction stop location is time information of a playback location when the reproduction of the digital broadcasting stream is stopped.

3. A method of controlling reproduction of a recorded digital broadcasting stream which is performed in an apparatus that receives the digital broadcasting stream and records the received digital broadcasting stream in a recording medium, the method comprising:
receiving a digital broadcasting stream of a channel to be recorded and recording the received digital broadcasting stream in the recording medium;
reproducing the recorded digital broadcasting stream when a predetermined key of a remote controller is input for reproducing the recorded digital broadcasting stream;
recording information of a reproduction stop location of the recorded digital broadcasting stream when the reproducing of the recorded digital broadcasting stream is stopped;
reproducing the recorded digital broadcasting stream from the beginning when the key of a remote controller is input for reproducing the recorded digital broadcasting stream;
searching for a location of the recorded digital broadcasting stream which is desired to be reproduced with reference to the information of the reproduction stop location when the key of the remote controller is re-input within a predetermined period of time; and
reproducing the recorded digital broadcasting stream from the searched reproduction stop location.

4. The method according to claim 3, wherein the information of the reproduction stop location is time information of a playback location when the reproducing of the broadcasting stream is stopped.

## Patentansprüche

1. Übertragungs-Aufnahmevorrichtung, umfassend:
eine Übertragungs-Empfangseinheit, welche dazu eingerichtet ist,
einen digitalen Übertragungs-Stream zu empfangen;
eine Übertragungs-Speichereinheit, welche dazu eingerichtet ist, den empfangenen digitalen Übertragungs-Stream zu speichern;
eine Übertragungs-Reproduktionseinheit, welche dazu eingerichtet ist,
den digitalen Übertragungs-Stream in der Übertragungs-Speichereinheit zu reproduzieren; und
eine Steuer-/Regeleinheit, umfassend
eine Aufnahme-Steuer-/Regeleinheit, welche dazu eingerichtet ist, den empfangenen digitalen Übertragungs-Stream in der Übertragungs-Speichereinheit aufzunehmen; und
eine Reproduktions-Steuer-/Regeleinheit, welche dazu eingerichtet ist, Information über eine Reproduktions-Anhalteposition des aufgenommenen digitalen Übertragungs-Streams aufzunehmen, wenn die Reproduktion des digitalen Übertragungs-Streams angehalten wird, **dadurch gekennzeichnet, dass** die Reproduktions-Steuer-/Regeleinheit dazu eingerichtet ist, die Übertragungs-Reproduktionseinheit zu steuern/regeln, um den aufgenommenen digitalen Übertragungs-Stream von Anfang an, wenn ein vorbestimmter Schlüssel einer Fernbedienung zum Reproduzieren des aufgenommenen digitalen Übertragungs-Streams eingegeben wird, zu reproduzieren, und dazu eingerichtet ist zu bestimmen, ob der Schlüssel innerhalb einer vorbestimmten Zeitspanne erneut eingegeben wird, und falls dies der Fall ist,
nach der Übertragungs-Anhalteposition unter Bezugnahme auf die aufgenommenen Information zu suchen und
den digitalen Übertragungs-Stream von der gesuchten Reproduktions-Anhalteposition zu reproduzieren.

2. Übertragungs-Aufnahmevorrichtung nach Anspruch 1,
wobei die Information der Reproduktions-Anhalteposition eine Zeitinformation einer Wiedergabe-Position ist, wenn die Reproduktion des digitalen Übertragungs-Streams angehalten ist.

3. Verfahren zum Steuern/Regeln einer Reproduktion eines aufgenommenen digitalen Übertragungs-Streams, welches in einer Vorrichtung durchgeführt wird, welche den digitalen Übertragungs-Stream empfängt, und den empfangenen digitalen Übertragungs-Stream in einem Aufnahme-Medium aufnimmt, wobei das Verfahren umfasst:
Empfangen eines digitalen Übertragungs-Streams eines aufzunehmenden Kanals, und Aufnehmen des empfangenen digitalen Übertragungs-Streams in dem Aufnahme-Medium;
Reproduzieren des aufgenommenen digitalen Übertragungs-Streams, wenn ein vorbestimmter Schlüssel einer Fernbedienung zum Reproduzieren des aufgenommenen digitalen Übertragungs-Streams eingegeben wird;
Aufnehmen von Information einer Reproduktions-Anhalteposition des aufgenommenen digitalen Übertragungs-Stream, wenn das Reproduzieren des aufgenommenen digitalen Übertragungs-Streams angehalten wird;
Reproduzieren des aufgenommenen digitalen Übertragungs-Streams von Anfang, wenn der Schlüssel einer Fernbedienung zum Reproduzieren des aufgenommenen digitalen Übertragungs-Streams eingegeben wird;
Suchen nach einer Position des aufgenommenen digitalen Übertragungs-Streams, welcher reproduziert werden soll, unter Bezugnahme auf die Information der Reproduktions-Anhalteposition, wenn der Schlüssel der Fernbedienung innerhalb einer vorbestimmten Zeitspanne erneut eingegeben wird; und
Reproduzieren des aufgenommenen digitalen Übertragungs-Streams von der gesuchten Reproduktions-Anhalteposition.

4. Verfahren nach Anspruch 3, wobei die Information der Reproduktions-Anhalteposition eine Zeitinformation einer Wiedergabe-Position ist, wenn das Reproduzieren des Übertragungs-Streams angehalten ist.

## Revendications

1. Appareil d'enregistrement de radiodiffusion comprenant:
une unité de réception de radiodiffusion configurée pour recevoir un flux numérique de radiodiffusion;
une unité de stockage de radiodiffusion configurée pour stocker le flux numérique de radiodiffusion;
une unité de reproduction de radiodiffusion configurée pour reproduire le flux numérique de radiodiffusion stocké dans l'unité de stockage de radiodiffusion; et
une unité de commande incluant
une unité de commande d'enregistrement configurée pour enregistrer le flux numérique de radiodiffusion dans l'unité de stockage de radiodiffusion; et
une unité de commande de reproduction configurée pour enregistrer des informations d'un emplacement d'arrêt de reproduction du flux numérique de radiodiffusion enregistré lors de l'arrêt de la reproduction du flux numérique de radiodiffusion,
**caractérisé en ce que** l'unité de commande de reproduction est configurée pour contrôler l'unité de reproduction de radiodiffusion afin de reproduire le flux numérique de radiodiffusion enregistré depuis le début lorsqu'une touche prédéterminée d'une commande à distance est actionnée pour la reproduction du flux numérique de radiodiffusion enregistré, et est configurée
afin de déterminer si la touche est actionnée à nouveau dans une période de temps prédéterminée, et, si c'est le cas,
afin de chercher l'emplacement d'arrêt de la reproduction avec référence à l'information enregistrée et
afin de reproduire le flux numérique de radiodiffusion à partir de l'emplacement d'arrêt de reproduction recherché.

2. Appareil d'enregistrement de radiodiffusion suivant la revendication 1,
dans lequel l'information de l'emplacement d'arrêt de la reproduction est une information de temps d'un emplacement de reproduction où la reproduction du flux numérique de radiodiffusion a été arrêtée.

3. Procédé de contrôle de la reproduction d'un flux numérique enregistré qui est réalisée dans un appareil qui reçoit le flux numérique de radiodiffusion et enregistre le flux numérique de radiodiffusion reçu sur un support d'enregistrement, le procédé comprenant:
la réception d'un flux numérique de radiodiffusion d'un canal à enregistrer et l'enregistrement du flux numérique de radiodiffusion reçu sur le support d'enregistrement;
la reproduction du flux numérique de radiodiffusion enregistré lorsqu'une touche prédéterminée d'une commande à distance est actionnée pour la reproduction du flux numérique de radiodiffusion enregistré;
l'enregistrement de l'information d'un emplacement d'arrêt de la reproduction du flux numérique de radiodiffusion enregistré lorsque la reproduction du flux numérique de radiodiffusion enregistré est arrêtée;
la reproduction du flux numérique de radiodiffusion enregistré depuis le début lorsque la touche d'une commande à distance est actionnée pour la reproduction du flux numérique de radiodiffusion enregistré;
la recherche d'un emplacement du flux numérique de radiodiffusion dont on désire la reproduction avec référence à l'information de l'emplacement de l'arrêt de la reproduction lorsque la touche de la commande à distance est actionnée à nouveau dans une période de temps prédéterminée; et
la reproduction du flux numérique de radiodiffusion à partir de l'emplacement d'arrêt de reproduction recherché.

4. Procédé suivant la revendication 3, dans lequel l'information de l'emplacement d'arrêt de la reproduction est une information de temps d'un emplacement de reproduction où la reproduction du flux de radiodiffusion a été arrêtée.
